**Europäisches Patentamt**

**European Patent Office**

**Office européen des brevets**

(11) Veröffentlichungsnummer: **0 349 478**

**A2**

# (12) EUROPÄISCHE PATENTANMELDUNG

(21) Anmeldenummer: **89730147.9**

(22) Anmeldetag: **21.06.89**

(51) Int. Cl.⁵: **B 65 D 90/00**

(30) Priorität: **30.06.88 DE 3822034**

(43) Veröffentlichungstag der Anmeldung:
**03.01.90  Patentblatt  90/01**

(84) Benannte Vertragsstaaten:
**BE DE ES FR GB GR IT LU NL SE**

(71) Anmelder: **Borchardt, Dieter**
**Rissener Dorfstrasse 45**
**D-2000 Hamburg 56  (DE)**

(72) Erfinder: **Borchardt, Dieter**
**Rissener Dorfstrasse 45**
**D-2000 Hamburg 56  (DE)**

(74) Vertreter: **UEXKÜLL & STOLBERG Patentanwälte**
**Beselerstrasse 4**
**D-2000 Hamburg 52  (DE)**

(54) **Twistlock.**

(57)  Bei einem Twistlock mit einer Platte (10) und an dieser an gegenüberliegenden Seiten vorgesehenen Kragen für den Einsatz in Verankerungsöffnungen von zu koppelnden ISO-Containern sowie mit einem sich durch die Platte (10) und die Kragen erstreckenden Riegelbolzen, an dessen Enden Verriegelungsköpfe (15) vorgesehen sind und der zwischen einer Einsetzstellung und einer Verriegelungsstellung verdrehbar ist, ist die Drehachse (D) des Riegelbolzens exzentrisch bezüglich der Kragenmitte (Z) angeordnet.

Fig.3

EP 0 349 478 A2

Bundesdruckerei Berlin

**Beschreibung**

## Twistlock

Die Erfindung bezieht sich auf einen Twistlock mit einer Platte und an dieser an gegenüberliegenden Seiten vorgesehenen Kragen für den Einsatz in Verankerungsöffnungen der zu koppelnden ISO-Container sowie mit einem sich durch die Platte und die Kragen erstreckenden Riegelbolzen, an dessen Enden Verriegelungsköpfe vorgesehen sind und der zwischen einer Einsetzstellung, in der mindestens einer seiner Verriegelungsköpfe im wesentlichen bezüglich dem zugehörigen Kragen ausgerichtet ist und im wesentlichen innerhalb von dessen Umfang liegt, und einer Verriegelungsstellung verdrehbar ist, in der die Verriegelungsköpfe im wesentlichen quer zur Längserstreckung der in ihrer Umfangsform zumindest in etwa der Form der Verankerungsöffnungen angepaßten Kragen ausgerichtet sind.

Derartige Twistlocks sind in unterschiedlichsten Formen bekannt (Prospekt "Container- und Trailer-Lashing Systems" der Ozean Service + Reparatur GmbH), und sie dienen üblicherweise dazu, zwei aufeinander gesetzte ISO-Container durch Eingriff in deren obere und untere Verankerungsöffnungen in der Verriegelungsstellung des Riegelbolzens miteinander zu koppeln, indem die Verriegelungsköpfe des Twistlocks in dieser Stellung die sich in Längsrichtung der Verankerungsöffnungen erstreckenden Randbereiche dieser Öffnungen hintergreifen. Es ist jedoch auch möglich, ISO-Container mit derartigen Twistlocks auf einem Ablageplatz zu verankern oder solche Twistlocks zu verwenden, um eine Kopplung zweier ISO-Container im Bereich ihrer Seitenwände vorzunehmen.

Ein Problem bei den bekannten Twistlocks besteht darin, daß ihre Verriegelungsköpfe sich bei Eingriff mit einer Verankerungsöffnung eines ISO-Containers in ihrer Verriegelungsstellung häufig in einer solchen Position innerhalb des Eckbeschlages des ISO-Containers befinden, daß das Einführen von weiteren Kopplungselementen, etwa Verankerungsnasen von Zurrstangen oder Verriegelungselementen für das Einhängen von Zurrketten in eine benachbarte Verankerungsöffnung behindert, wenn nicht gar unmöglich gemacht wird.

Es ist Aufgabe der Erfindung, einen Twistlock dahingehend zu verbessern, daß seine Verriegelungsköpfe in der Verriegelungsstellung das Einführen von Kopplungselementen in benachbarte Verankerungsöffnungen des gleichen Eckbeschlages nicht behindern.

Zur Lösung dieser Aufgabe wird ein Twistlock der eingangs erwähnten Art erfindungsgemäß derart ausgestaltet, daß die Drehachse des Riegelbolzens exzentrisch bezüglich der Kragenmitten angeordnet ist.

Bei einer derartigen Lage der Drehachse des Riegelbolzens ergibt sich in der Verriegelungsstellung eine gegenüber der Lage bei bekannten Twistlocks veränderte Lage der Verriegelungsköpfe bezüglich der Kragen und damit bezüglich der den Kragen aufnehmenden Verankerungsöffnung, wobei die Verlagerung von der Größe und der Richtung der Exzentrizität abhängt.

Wenn die Drehachse des Riegelbolzens in Richtung der Längserstreckung des Kragens aus dessen Mitte verlagert ist, so erfolgt bei Verschwenkung von der Einsetzstellung in die Verriegelungsstellung eine Verlagerung der Verriegelungsköpfe sowohl in Richtung der Längserstreckung der Kragen aus deren Mitte als auch eine Verlagerung in Querrichtung dazu, wodurch sich der Verriegelungskopf in der Verriegelungsstellung näher zu einem Ende des benachbarten Kragens und damit der Verankerungsöffnung befindet. Dadurch wird Freiraum hinter der benachbarten Verankerungsöffnung des zugehörigen Eckbeschlages geschaffen, um in diese ein zusätzliches Verankerungselement einsetzen zu können.

Eine entsprechende Verlagerung läßt sich auch dann erreichen, wenn die Drehachse des Riegelbolzens in Querrichtung des Kragens aus dessen Mitte verlagert ist.

Sieht man eine Verlagerung der Drehachse sowohl in Längsrichtung als auch in Querrichtung des Kragens vor, so kann auf diese Weise beispielsweise erreicht werden, daß die Verriegelungsköpfe in ihrer Verriegelungsstellung lediglich in Längsrichtung des Kragens verlagert sind, jedoch in Querrichtung mittig zu ihm ausgerichtet bleiben, oder daß lediglich eine Verlagerung in Querrichtung erfolgt, während die Längsachse der Verriegelungsköpfe durch die Mittelachse der Kragen verläuft.

Es ist zwar bereits bekannt (GB-PS 1 355 257), die Verbindungszapfen der Köpfe von sogenannten Spreadern, deren Abstand voneinander durch einen mit dem Hebezeug verbundenen Querträger festgelegt ist, so am Querträger zu befestigen, daß sie bei Eingriff mit den Verankerungsöffnungen eines Containers exzentrisch in diesen Verankerungsöffnungen sitzen. Hierbei handelt es sich jedoch nicht um jeweils funktionell selbständige Baueinheiten in Form von Twistlocks, und außerdem weist ein derartiger Spreader benachbart zu den Spreaderköpfen keine Kragen auf, zu denen die Verbindungszapfen exzentrisch verlaufen würden. Vielmehr soll durch diese Anordnung sowie die Festlegung der Abstände der beiden Spreaderköpfe durch den Querträger einschließlich einer entsprechenden Formgebung der Spreaderköpfe erreicht werden, daß sich diese Spreaderköpfe ohne Veränderungen zum Einsatz in Verankerungsöffnungen von ISO-Containern und in Verankerungsöffnungen von sogenannten Sealand-Containern eignen.

Bei dem erfindungsgemäßen Twistlock weisen in einer bevorzugten Ausgestaltung die Kragen und die Platte seitliche Öffnungen für das Einführen des Riegelbolzens in seine Betriebslage auf, wobei diese seitlichen Öffnungen vorzugsweise im Bereich einer Längsseite der Kragen vorgesehen sind.

Ein Twistlock mit derartigen seitlichen Öffnungen an der Querseite ist bekannt (DE-OS 26 32 530), doch ergeben sich bei diesem bekannten Twistlock infolge der mittigen Lage des Riegelbolzens bezüglich der Kragen verhältnismäßig schmale und daher schwache Abschnitte, die die Öffnungen in Längsrichtung der Kragen seitlich begrenzen. Diese Abschnitte sind normalerweise nicht in der Lage, die im Betrieb auftretenden hohen Belastungen aufzunehmen.

Durch die erfindungsgemäße Ausbildung mit der exzentrischen Drehachse des Riegelbolzens und der Lage der Öffnungen wird es demgegenüber möglich, durch eine Verlagerung der Drehachse in Richtung auf die Öffnungen den den Öffnungen gegenüberliegenden Bereich der Kragen ausreichend dickwandig auszubilden, so daß die auftretenden Kräfte ohne weiteres aufgenommen werden können.

In einer bevorzugten Ausgestaltung dieses erfindungsgemäßen Twistlocks haben die seitlichen Öffnungen zumindest der Kragen geringere Weite als der Durchmesser der Aufnahmeöffnung für den Riegelbolzen, und der Riegelbolzen ist an mindestens einer Seite abgeflacht, so daß seine maximale Dicke senkrecht zur Abflachung kleiner als die Weite der seitlichen Öffnungen ist.

Durch diese Ausbildung des Riegelbolzens läßt sich dieser in einer Ausrichtung durch die seitlichen Öffnungen hindurch in die Aufnahmeöffnung einführen und kann in einer demgegenüber ausreichend verdrehten Stellung nicht mehr durch die seitlichen Öffnungen austreten. Dabei verläuft die Abflachung vorzugsweise parallel zur Längserstreckung der Verriegelungsköpfe, so daß das Einsetzen in einer Ausrichtung des Riegelbolzens entsprechend der Verriegelungsstellung stattfinden kann.

Um zu verhindern, daß der Riegelbolzen unbeabsichtigt wieder aus den seitlichen Öffnungen austritt, kann eine Sperreinrichtung zur Verhinderung dieses Austrittes vorhanden sein. Diese Sperreinrichtung kann beispielsweise einen aus der Begrenzungswand der seitlichen Öffnung in der Platte vorstehenden Stift aufweisen, der in der Einsetzstellung des Riegelbolzens in Eingriff mit einer im am Riegelbolzen angebrachten Schwenkhebel vorgesehenen Bohrung steht. Dieser Eingriff von dem nach dem Einsetzen des Riegelbolzens in die Aufnahmeöffnung eingebrachten Stift mit der Bohrung verhindert eine Verlagerung des Riegelbolzens aus der Aufnahmeöffnung durch die seitlichen Öffnungen hindurch.

Vorzugsweise ist die seitliche Öffnung in der Platte zur Bildung eines Freiraums für den Schwenkhebel zur Verdrehung des Riegelbolzens erweitert.

Es sei erwähnt, daß es durch die einfache Ausbildung von mit seitlichen Öffnungen versehener Platte mit Kragen möglich wird, Platte und Kragen einteilig, etwa durch Schmieden aus einem Stück herzustellen, weil es zum Montieren des die Verriegelungsköpfe tragenden Riegelbolzens nicht mehr erforderlich ist, die Baueinheit aus Kragen und Platten trennbar auszubilden.

Die Erfindung wird im folgenden anhand der Figuren näher erläutert.

Figuren 1A bis 1C zeigen jeweils die Verlagerung der Mitte eines Verriegelungskopfes bei dessen Drehung um eine exzentrische Drehachse, wobei in den Figuren unterschiedliche Lageverhältnisse von Mitte und Drehachse dargestellt sind.

Figur 2 zeigt in einer Seitenansicht einen Twistlock.

Figur 3 zeigt eine Draufsicht auf den Twistlock aus Figur 2.

Figur 4 zeigt eine Seitenansicht des Twistlocks aus Figur 2 von links.

Figur 5 zeigt in einer Seitenansicht einen anderen Twistlock.

Figur 6 zeigt oberhalb der Mittellinie eine Draufsicht und unterhalb der Mittellinie einen Schnitt entlang der Linie VI-VI aus Figur 5.

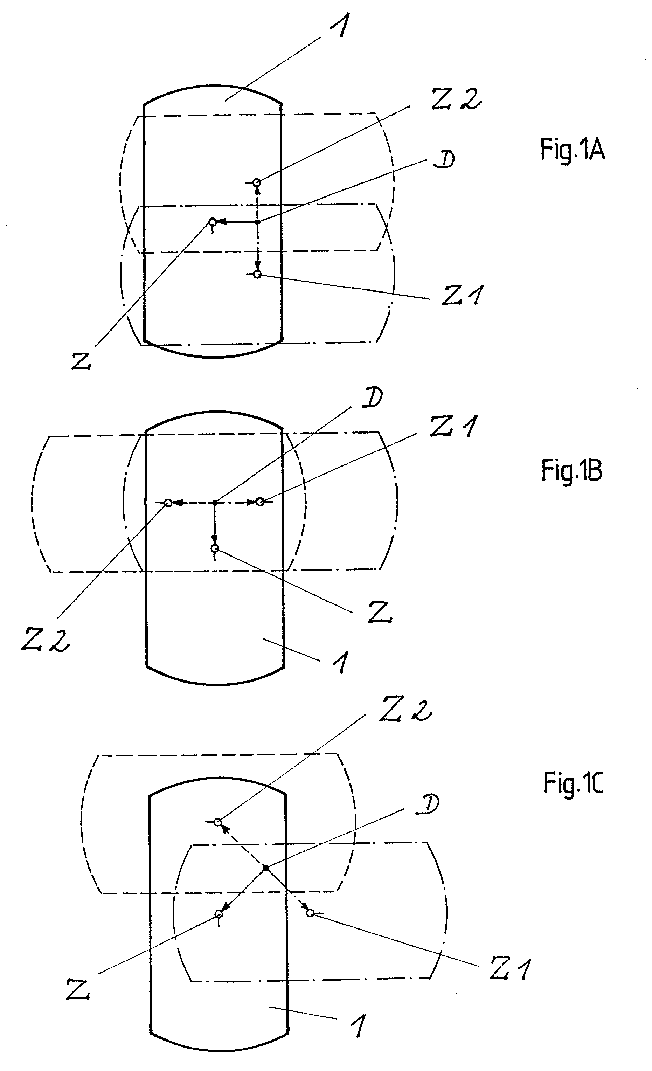

In Figur 1A ist schematisch ein Verriegelungskopf dargestellt, der um eine Drehachse D verdrehbar ist, die, wie gezeigt, in Querrichtung des Verriegelungskopfes 1 bezüglich der Mitte Z des Verriegelungskopfes 1 versetzt ist.

Wird der Verriegelungskopf 1 im Uhrzeigersinn um die Drehachse D gedreht, so kommt er in die gestrichelt gezeigte Stellung, und seine Mitte Z liegt dann bei Z2. Man erkennt, daß der Verriegelungskopf durch diese Verdrehung um die exzentrische Drehachse D bezüglich einer ihn aufnehmenden Verankerungsöffnung, die im wesentlichen entsprechend der ausgezogen gezeigten Lage des Verriegelungskopfes 1 geformt und positioniert ist, in Längs- und in Querrichtung verlagert ist, so daß er sich einerseits näher zu einem Querende der Verankerungsöffnung befindet und andererseits eine Längsseite der Verankerungsöffnung weiter hintergreift als die gegenüberliegende Längsseite.

Erfolgt in der Anordnung gemäß Figur 1A eine Verdrehung des Verriegelungskopfes 1 im Gegenuhrzeigersinn um die Drehachse D, so kommt der Verriegelungskopf 1 in die strichpunktiert gezeigte Lage, und seine Mitte liegt bei Z1.

In der Anordnung gemäß Figur 1B ist die Drehachse D des schematisch dargestellten Verriegelungskopfes 1 in Richtung der Längsachse des Verriegelungskopfes 1 bezüglich seiner Mitte Z versetzt, und eine Drehung im Uhrzeigersinn führt zu der gestrichelt gezeichneten Lage mit der Position der Mitte Z bei Z2, während eine Verdrehung im Gegenuhrzeigersinn die strichpunktiert gezeigte Lage des Verriegelungskopfes 1 mit seiner Mitte bei Z1 ergibt.

Man erkennt, daß in diesem Fall der Verriegelungskopf 1 bei jeder Verdrehung in Richtung zu dem gleichen Ende der zugehörigen Verankerungsöffnung verlagert wird, jedoch abhängig von der Verdrehungsrichtung unterschiedliche seitliche Randbereiche der Verankerungsöffnung weiter hintergreift.

Die Anordnung gemäß Figur 1C stellt eine Kombination der Anordnungen gemäß Figuren 1A und 1B dar, da die Drehachse D sowohl in Quer- als auch in Längsrichtung um die gleiche Strecke bezüglich der Mitte Z des Verriegelungskopfes 1 verlagert ist, also auf einer Linie durch die Mitte Z liegt, die unter 45° bezüglich der Längsachse des Verriegelungskopfes 1 verläuft.

Erfolgt bei der Anordnung gemäß Figur 1C eine Drehung um die Drehachse D im Uhrzeigersinn, so gelangt der Verriegelungskopf 1 in die gestrichelt dargestellte Lage, und seine Mitte Z befindet sich auf der Längsachse des Verriegelungskopfes 1 bei Z2, d.h. der Verriegelungskopf 1 liegt in dieser Stellung mittig bezüglich der Längsachse einer den Verriegelungskopf 1 aufnehmenden Verankerungsöffnung, so daß er die beiden seitlichen Randbereiche in gleicher Länge hintergreift, während er zu einem Ende der Verankerungsöffnung verlagert ist.

Eine Drehung der Anordnung aus Figur 1C im Gegenuhrzeigersinn führt zu der strichpunktiert gezeigten Lage des Verriegelungskopfes 1, in der die Mitte Z auf der Querachse des Verriegelungskopfes 1 bei Z1 liegt. Der Verriegelungskopf befindet sich dann also in der Mitte der Längserstreckung der zugehörigen Verankerungsöffnung, ist jedoch in deren Querrichtung verlagert.

Die Darstellung gemäß Figur 1A bis 1C zeigen somit, daß es durch entsprechende Wahl der exzentrischen Lage der Drehachse eines Verriegelungskopfes bezüglich dessen Mitte möglich ist, den Verriegelungskopf in der Verriegelungsstellung in in unterschiedlichen Weisen versetzte Lagen bezüglich der Mitte der den Verriegelungskopf aufnehmenden Verankerungsöffung eines ISO-Containers zu bringen, wobei insbesondere die gestrichelte Darstellung gemäß Figur 1C erkennen läßt, daß eine Verlagerung in Längsrichtung der Verankerungsöffnung möglich ist, wodurch im Eckbeschlag dieser Verankerungsöffnung ein Freiraum für das Einsetzen weiterer Verankerungselemente geschaffen wird. Ferner erkennt man, daß durch entsprechende Wahl der Exzentrizität der Grad des Hintergreifens der seitlichen Randbereiche der Verankerungsöffnungen durch den Verriegelungskopf verändert werden kann.

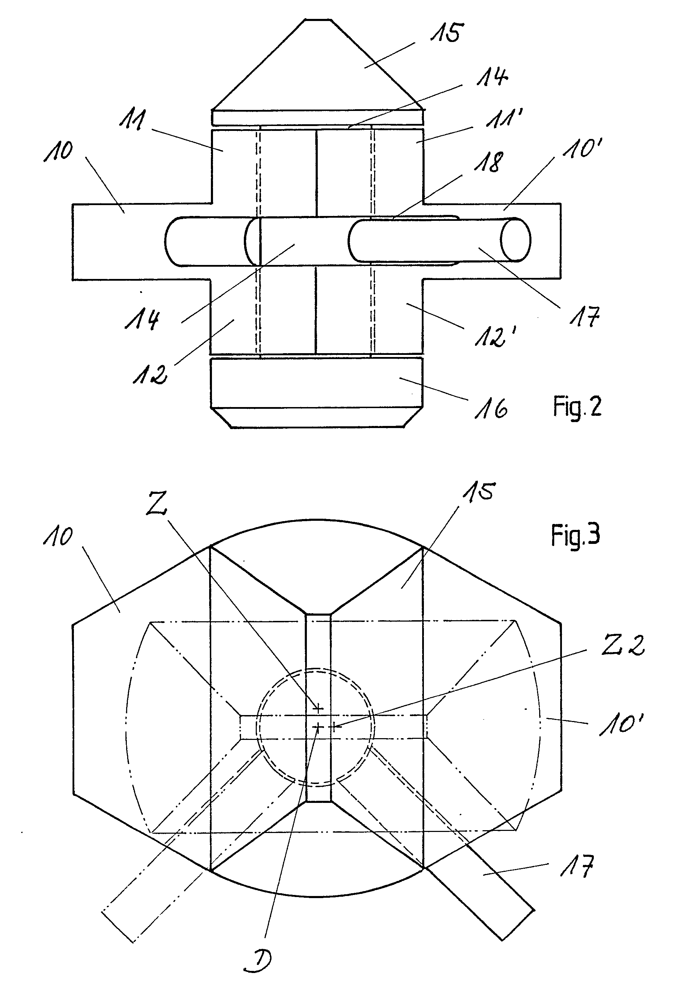

Ein Twistlock mit einer exzentrischen Lage der Drehachse bezüglich der Mitte der Verriegelungsköpfe ist in den Figuren 2 bis 4 dargestellt, wobei die Exzentrizität der Anordnung gemäß Figur 1B entspricht.

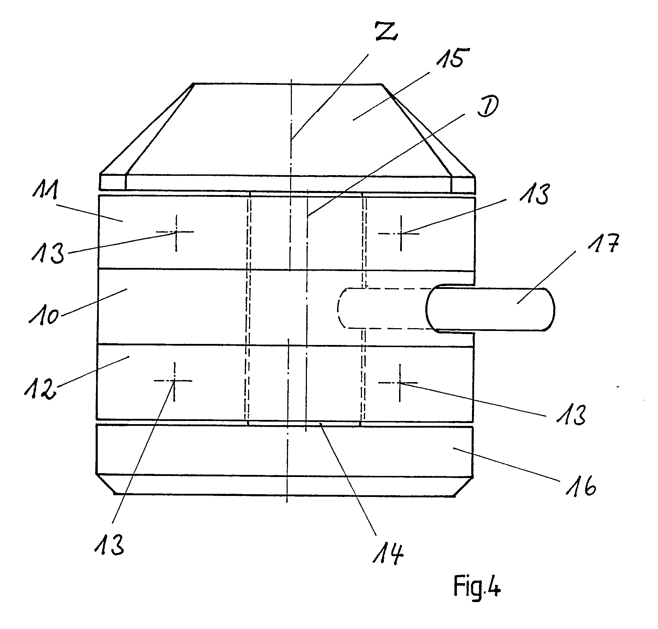

Der dargestellte Twistlock hat eine Platte 10, 10', von der sich nach oben ein Kragen 11, 11' und nach unten ein Kragen 12, 12' erstreckt. Das so gebildete Gehäuse ist zweiteilig ausgebildet und, wie in Figur 2 zu erkennen ist, mit einer senkrechten Trennfuge versehen, so daß der Plattenteil 10 und die Kragenteile 11 und 12 eine Gehäusehälfte und der Plattenteil 10' und die Kragenteile 11' und 12' die andere Gehäusehälfte bilden. Die beiden Gehäusehälften werden, wie in Figur 4 angedeutet, mittels Schrauben 13 verbunden.

In das von Platte 10, 10' und Kragen 11, 11' und 12, 12' gebildete Gehäuse ist in eine in den Figuren 2 und 4 senkrecht verlaufende Aufnahmeöffnung ein Riegelbolzen 14 eingesetzt, der am oberen Ende einen Verriegelungskopf 15 und am unteren Ende einen Verriegelungskopf 16 aufweist. Dieses Einsetzen erfolgt bei getrennten Gehäusehälften, die danach mittels der Schrauben 13 verbunden werden.

In der Mittelebene der Platte 10, 10' befindet sich ein radial bis zum Riegelbolzen 14 führender Ausschnitt 18, durch den sich in bekannter Weise der am Riegelbolzen 14 befestigte Schwenkhebel 17 erstreckt, mit dessen Hilfe der Riegelbolzen 14 zwischen der dargestellten Einsetzstellung und der Verrie gelungsstellung, die strichpunktiert in Figur 3 angedeutet ist, verschwenkt werden kann.

Die Kragen 11, 11' und 12, 12' haben in etwa die Form der sie aufnehmenden Verankerungsöffnungen der zu koppelnden Container, so daß sie in bekannter Weise infolge der Kopplung auftretende Schubkräfte aufnehmen. Die Umfangsform der Verriegelungsköpfe 15 und 16 entspricht derjenigen der benachbarten Kragen 11, 11' und 12, 12', so daß sie das Einsetzen des Twistlocks in Verankerungsöffnungen nicht behindern, wenn sie sich in der dargestellten Einsetzstellung befinden, jedoch die seitlichen Randbereiche der jeweiligen Verankerungsöffnung hintergreifen, wenn sie in die Verriegelungsstellung verschwenkt sind.

Der bisher beschriebene Aufbau und die bisher beschriebene Funktionsweise des Twistlocks gemäß Figuren 2 bis 4 entsprechen üblichen Twistlocks, so daß insoweit keine zusätzlichen Erläuterungen erforderlich sind.

Abweichend vom Aufbau üblicher Twistlocks verläuft bei dem Twistlock gemäß Figuren 2 bis 4 die Mittelachse und damit die Drehachse des Riegelbolzens 14 nicht koaxial zur Mittelachse der Kragen 11, 12' und 12, 12', sondern, wie den Figuren 3 und 4 zu entnehmen ist, ist die Drehachse D des Riegelbolzens 14 durch entsprechende Positionierung der diesen aufnehmenden Mittelöffnung des Gehäuses aus Platte 10, 10' und Kragen 11, 11' und 12, 12' in Richtung der Längsachse der Kragen 11, 11' und 12, 12' und damit auch entsprechend in Richtung der Längsachsen der sich in der gezeigten Einsetzstellung befindenden Verriegelungsköpfe 15 und 16 versetzt, wobei die gemeinsame Mittelachse der sich in der Einsetzstellung befindenden Verriegelungsköpfe 15 und 16 in den Figuren 3 und 4 mit Z bezeichnet ist.

Wird bei diesem Aufbau der Schwenkhebel 17 aus der ausgezogen gezeigten Stellung, in der sich die Verriegelungsköpfe 15 und 16 in der Einsetzstellung befinden, in die in Figur 3 strichpunktiert angedeutete Stellung verschwenkt, so gelangen die Verriegelungsköpfe 15 und 16 in die ebenfalls strichpunktiert angedeutete Verriegelungsstellung, in der sie die seitlichen Randbereiche der jeweiligen Verankerungsöffnung des Containers hintergreifen.

Wie Figur 3 zu entnehmen ist, werden wegen der exzentrischen Lage der Drehachse D die Verriegelungsköpfe 15 und 16 bei der Bewegung in die Verriegelungsstellung auch bezüglich der Platte 10, 10' und der Kragen 11, 11' und 12, 12' und damit auch bezüglich den Verankerungsöffnungen etwas in Richtung der Längsachsen der Kragen 11, 11' und 12, 12' und etwas quer dazu verlagert, so daß die in Figur 3 rechte Seite der in der Verriegelungsstellung befindlichen Verriegelungsköpfe 15, 16 die zugehöri-gen seitlichen Randbereiche der Verankerungsöff-nungen weiter hintergreift als die in Figur 3 linken Seiten der Verriegelungsköpfe 15, 16, während die Verriegelungsköpfe 15, 16 in der Verriegelungsstellung darüber hinaus in Figur 3 etwas nach unten, also in Längsrichtung der Verankerungsöffnungen von einem Ende dieser Verankerungsöffnungen weg und näher zum anderen Ende verlagert sind. Ferner ist zu erkennen, daß der Ausschnitt 18 kleiner ausgebildet sein kann, als wenn die Drehachse des Riegelbolzens in der Mittelachse Z der Kragen 11, 11' bzw. 12, 12' läge.

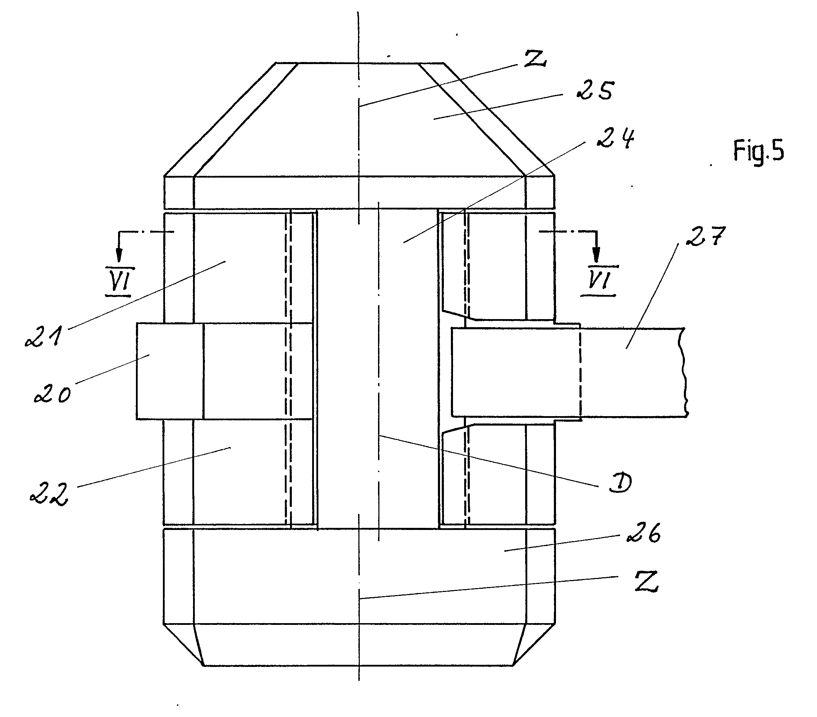

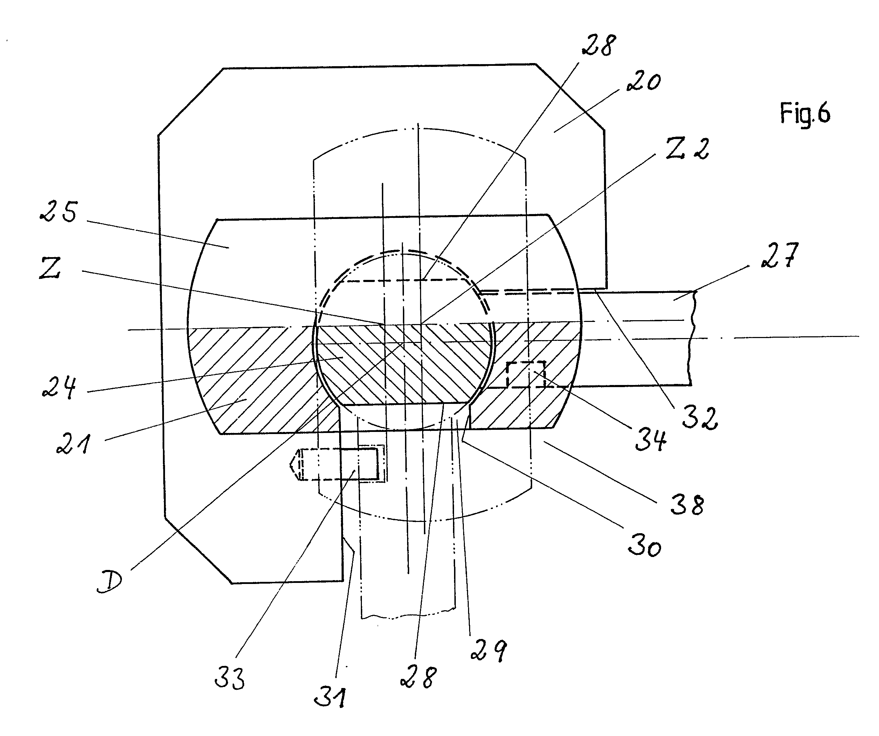

In den Figuren 5 und 6 ist ein Twistlock gezeigt, bei dem die Platte 20 und die Kragen 21 und 22 einstückig ausgebildet sind und beispielsweise durch Schmieden hergestellt sein können. Um in das so gebildete Gehäuse einen Verriegelungsköpfe 25 und 26 tragenden Riegelbolzen 24 einsetzen zu können, ist an einer Längsseite der Kragen 21, 22 jeweils eine seitliche Öffnung 29 vorhanden, die sich von oben nach unten durch den Kragen 21, die Platte 20 und den Kragen 22 erstrecken. Diese seitlichen Öffnungen 29 sind im Bereich der Platte zur Bildung eines von den Plattenwänden 31 und 32 begrenzten Ausschnittes 38 erweitert. Der Riegelbolzen 24 weist parallel zu den Längserstreckungen der Verriegelungsköpfe 25 und 26 verlaufende einander gegenüberliegende Abflachungen 28 auf, wobei die maximale Dicke des Riegelbolzens in Richtung senkrecht zu den Abflachungen 28 kleiner ist als die Weite der seitlichen Öffnungen 29 zwischen den Seitenwänden 31 und 30 (Figur 6), während der dazu senkrecht verlaufende maximale Durchmesser des Riegelbolzens 24 größer ist als diese Weite der seitlichen Öffnungen 29. Auf diese Weise ist es möglich, den Riegelbolzen 24 in seiner gegenüber der Lage aus Figur 6 um 90° verdrehten Stellung, also in der Verriegelungsstellung der Verriegelungsköpfe 25 und 26 in die im Gehäuse aus Platte 20 und Kragen 21 und 22 gebildete Aufnahmeöffnung einzusetzen und ihn dann durch Verdrehung in die Einsetzstellung gemäß Figur 6 gegen das Entfernen durch die seitliche Öffnung 29 zu sichern.

Um den Riegelbolzen 24 auch gegen ein Entfernen durch die seitlichen Öffnungen 29 in der Verriegelungsstellung des Riegelbolzens 24 und der Verriegelungsköpfe 25 und 26 zu sichern, wird nach dem Einsetzen des Riegelbolzens 24 in die Aufnahmebohrung in eine Bohrung in der den Ausschnitt 38 der Platte 20 begrenzenden Wand 31 ein Stift 33 eingesetzt, der mit einer Bohrung 34 im am Riegelbolzen 24 angeformten, sich durch den Ausschnitt 38 nach außen erstreckenden Schwenkhebel 27 zusammenwirkt. Die Bohrung 34 kommt, wie in Figur 6 angedeutet, bei Verschwenkung des Riegelbolzens 24 in die Verriegelungsstellung in Eingriff mit dem Stift 33, wodurch sicher verhindert wird, daß der Riegelbolzen 24 durch die seitlichen Öffnungen 29 austreten kann.

Wie dargestellt, ist auch in diesem Fall die Drehachse D des Riegelbolzens 24 exzentrisch bezüglich der Mitte Z der Kragen 21 und 22 bzw. der sich in der dargestellten Einsetzstellung befindenden Verriegelungsköpfe 25 und 26 versetzt, und zwar sowohl in Längsrichtung als auch in Querrichtung der Kragen 21, 22. Dieser Versatz entspricht demjenigen aus Figur 1C. Dadurch befindet sich also die Längsachse der den Riegelbolzen 24 aufnehmenden Aufnahmeöffnung in Figur 6 etwas unterhalb und weiter rechts bezüglich der Mitte Z der Kragen 21 und 22, so daß die Wandstärke der Kragen 21 und 22 im den seitlichen Öffnungen 29 gegenüberliegenden Bereich größer ist als wenn die Drehachse D sich auf der Längsachse der Kragen 21 und 22 befände, wodurch eine größere Festigkeit erreicht wird. Darüber hinaus ist durch die Verlagerung der Drehachse D in Richtung quer zur Längserstreckung der Kragen 21 und 22 in Richtung auf den Ausschnitt 38 (in Figur 6 nach unten) erreicht, daß die sich oberhalb und unterhalb des Ausschnittes 38 befindenden Abschnitte der Kragen 21 und 22, die von der Platte 20 nicht mehr abgestützt werden, verkürzt sind, wodurch sie Belastungen besser aufnehmen können.

Wird der Twistlock gemäß Figuren 5 und 6 durch Schwenken des Schwenkhebels 27 von der Plattenfläche 32 weg in Richtung auf die Plattenfläche 31 aus seiner ausgezogen gezeigten Einsetzstellung in die in Figur 6 strichpunktiert dargestellte Verriegelungsstellung bewegt, so verlagert sich die Mittelachse Z der Verriegelungsköpfe 25 und 26 in Richtung der Längsachsen der Kragen 21 und 22 und kommt in die Lage Z2, während die Verriegelungsköpfe 25 und 26 sich in der in Figur 6 strichpunktiert dargestellten Stellung befinden. Auf diese Weise sind also, wie auch Figur 1C zeigt, die Verriegelungsköpfe 25 und 26 in der Verriegelungsstellung gegenüber der Einsetzstellung in Richtung der Längsachse der Kragen 21 und 22 verlagert, so daß, wie Figur 6 zeigt, an den dem Ausschnitt 38 abgewandten Seiten der Kragen 21 und 22 größere Freiräume entstehen als an den gegenüberliegenden Seiten.

## Patentansprüche

1. Twistlock mit einer Platte (10, 10'; 20) und an dieser an gegenüberliegenden Seiten vorgesehenen Kragen (11, 11', 12, 12'; 21, 22) für den Einsatz in Verankerungsöffnungen der zu koppelnden ISO-Container, sowie mit einem sich durch die Platte (10, 10'; 20) und die Kragen (11, 11', 12, 12'; 21, 22) erstreckenden Riegelbolzen (14; 24), an dessen Enden Verriegelungsköpfe (15, 16; 25, 26) vorgesehen sind und der zwischen einer Einsetzstellung, in der mindestens einer seiner Verriegelungsköpfe (15, 16; 25, 26) im wesentlichen bezüglich dem zugehörigen Kragen (11, 11', 12, 12'; 21, 22) ausgerichtet ist und im wesentlichen innerhalb von dessen Umfang liegt, und einer Verriegelungsstellung verdrehbar ist, in der die Verriegelungsköpfe (15, 16; 25, 26) im wesentlichen quer zur Längserstreckung der in ihrer Umfangsform zumindest in etwa der Form der Verankerungsöffnungen angepaßten Kragen (11, 11', 12, 12'; 21, 22) ausgerichtet sind, **dadurch gekennzeichnet,** daß die Drehachse (D) des Riegelbolzens (14; 24) exzentrisch bezüglich der Kragenmitten (Z) angeordnet sind.

2. Twistlock nach Anspruch 1, **dadurch gekennzeichnet,** daß die Drehachse (D) des Riegelbolzens (14; 24) in Richtung der Längserstreckung der Kragen (11, 11', 12, 12'; 21, 22) aus deren Mitten (Z) verlagert ist.

3. Twistlock nach Anspruch 1 oder 2, **dadurch gekennzeichnet,** daß die Drehachse (D) des Riegelbolzens (24) quer zur Längserstrekkung der Kragen (21, 22) aus deren Mitten (Z) verlagert ist.

4. Twistlock nach Anspruch 3 mit sowohl in Richtung der Längserstreckung als auch in Richtung der Quererstreckung der Mitten (2) der Kragen (21, 22) verlagerter Drehachse (D), **dadurch gekennzeichnet,** daß die Drehachse (D) in beiden Richtungen um die gleiche Strecke verlagert ist.

5. Twistlock nach einem der Ansprüche 1 bis 4, **dadurch gekennzeichnet,** daß die Kragen (21, 22) und die Platte (20) seitliche Öffnungen (29) für das Einführen des Riegelbolzens (24) in seine Betriebslage aufweisen.

6. Twistlock nach Anspruch 5, **dadurch gekennzeichnet,** daß die seitlichen Öffnungen (29) zumindest der Kragen (21, 22) geringere Weite als der Durchmesser der Aufnahmeöffnung für den Riegelbolzen (24) haben und daß der Riegelbolzen (24) an mindestens einer Seite abgeflacht ist, so daß seine maximale Dicke senkrecht zur Abflachung (28) kleiner als die Weite der seitlichen Öffnungen (29) ist.

7. Twistlock nach Anspruch 6, **dadurch gekennzeichnet,** daß die Abflachung (28) parallel zur Längserstreckung der Verriegelungsköpfe (25, 26) verläuft.

8. Twistlock nach einem der Ansprüche 5 bis 7, **gekennzeichnet** durch eine Sperreinrichtung (33, 34) zur Verhinderung des Austritts des Riegelbolzens (24) durch die seitlichen Öffnungen (29).

9. Twistlock nach Anspruch 8, **dadurch gekennzeichnet,** daß die Sperreinrichtung einen aus der Begrenzungswand (31) der seitlichen Öffnung in der Platte (20) vorstehenden Stift (33) aufweist, der in der Einsetzstellung des Riegelbolzens (24) in Eingriff mit einer im am Riegelbolzen (24) angebrachten Schwenkhebel (27) vorge sehenen Bohrung (34) steht.

10. Twistlock nach einem der Ansprüche 5 bis 9, **dadurch gekennzeichnet,** daß die seitliche Öffnung (38) in der Platte (20) zur Bildung eines Freiraums für den Schwenkhebel (27) zur Verdrehung des Riegelbolzens (24) erweitert ist.

Fig.1A

Fig.1B

Fig.1C

Fig.2

Fig.3

Fig.4

Fig.5

Fig.6

EP 0 349 478 A2